# EUROPÄISCHE PATENTSCHRIFT

(11) **EP 2 878 988 B1**
(45) Veröffentlichungstag und Bekanntmachung des Hinweises auf die Patenterteilung: **24.07.2019**
(21) Anmeldenummer: 14190915.0
(22) Anmeldetag: 29.10.2014
(51) Int. Cl.: G02C 5/12

(54) **Brille mit verstellbaren Nasenauflegeteilen**
Spectacles with adjustable nosepads
Lunettes dotées de plaquettes réglables

(30) Priorität: 29.11.2013 DE 102013224609
(43) Veröffentlichungstag der Anmeldung: 03.06.2015
(73) Patentinhaber: ALPINA SPORTS GmbH, 86316 Friedberg (DE)
(72) Erfinder: Zipfel, Robert, 86169 Augsburg (DE); Markt, Ferdinand, 89312 Günzburg (DE)
(74) Vertreter: Rau, Schneck & Hübner Patentanwälte Rechtsanwälte PartGmbB

(56) Entgegenhaltungen:
- EP-A1- 1 469 338
- EP-A1- 2 284 598
- FR-A1- 2 219 429
- US-A- 5 464 413
- US-A1- 2011 157 542
- US-B1- 7 380 934

## Beschreibung

Die Erfindung betrifft eine Brille, die vorzugsweise eine optische Brille, eine Sonnenbrille, eine Sportbrille oder eine Arbeitsschutzbrille ist, gemäß dem Oberbegriff des Anspruchs 1. Die Brille umfasst mindestens eine Brillenscheibe, eine Nasenausnehmung und eine im Bereich der Nasenausnehmung vorgesehene Nasenauflegeteil-Anordnung mit miteinander gekoppelten Nasenauflegeteilen.

Aus der US 7,380,934 B1 ist eine Brille mit verstellbaren Nasenauflegeteilen bekannt. Jedes Nasenauflegeteil hat an seinem oberen Ende ein Kopplungsrad, das an einer Brücke schwenkbar gelagert ist und eine Vielzahl umfangsseitig angeordneter Antriebszähne sowie stirnseitiger Reibrippen umfasst. Die Antriebszähne der beiden Nasenauflegeteile kämmen miteinander, so dass die Nasenauflegeteile miteinander gekoppelt sind. Die Reibrippen von jedem Nasenauflegeteil verlaufen parallel zueinander. Sie stehen in einer Standard-Stellung der Nasenauflegeteile mit Begrenzungsrinnen an der Brücke in Eingriff, so dass die Nasenauflegeteile in genau einer vorgegebenen Standard-Stellung gehalten werden können. Wenn die Nasenauflegeteile aus der Standard-Stellung verschwenkt werden, gelangen die Reibrippen außer Eingriff mit den Begrenzungsrillen. Nachteilig an dieser bekannten Brille ist, dass deren Tragekomfort zu wünschen übrig lässt.

Die EP 2 284 598 A1 offenbart eine Brille mit einer Nasenauflegeteil-Anordnung. Die Nasenauflegeteil-Anordnung umfasst ein Adapterstück, mit dem zwei separate Nasenauflegeteile jeweils in Rastverbindung stehen.

Eine aus der US 6,520,636 B2 bekannte Brille weist Nasenauflegeteile auf, die zwischen bestimmten Positionen beweglich sind. Ferner umfasst die Brille eine Zwängeinrichtung, die die Nasenauflegeteile aufeinander zu zwängt. Die Zwängeinrichtung kann beispielsweise eine Blattfeder oder eine Magnetanordnung umfassen.

Eine gattungsgemäße Brille ist auch aus der DE 37 29 588 C1 bekannt. Als störend wird bei dieser Brille im Allgemeinen empfunden, dass sich deren Nasenauflegeteile in der Praxis oftmals verstellen. Dies führt beispielsweise zu einem losen Sitz der Brille oder zu drückenden Nasenauflegeteilen.

Die US 2012/0206690 A1 offenbart eine Nasenauflage mit verstellbaren Nasenauflegeteilen.

Aus der US 2011/0157542 A1 ist eine Brille bekannt, deren Bügel über Schwenkgelenke an einen Brillenrahmen angelenkt sind. Jedes Schwenkgelenk umfasst einen an dem jeweiligen Brillenbügel angeordneten Ansatz und eine in dem Brillenbügel ausgebildete Öffnung. An dem Brillenrahmen sind jedem Schwenkgelenk zwei Vorsprünge zugeordnet, die mit radial zur Schwenkachse verlaufenden und um die Schwenkachse angeordneten Vertiefungen in dem jeweiligen Brillenbügel in Eingriff bringbar sind. Durch den Eingriff zwischen den Vorsprüngen und den Vertiefungen sind die Brillenbügel in ihrer jeweiligen Schwenkstellung örtlich festlegbar.

Aus der EP 1 469 338 A1 sind verschiedene Brillen mit Brillenbügeln bekannt, die an einem Brillenrahmen angelenkt sind. Die entsprechenden Schwenkgelenke sind derart ausgebildet, dass die Brillenbügel in jeweiligen Schwenkstellungen fixiert sind.

Die US 5,464,413 offenbart einen Nasenclip zum Verschließen der Nasenlöcher eines Trägers. Der Nasenclip hat zwei Arme, die gelenkig miteinander verbunden sind und Nasenkissen tragen. Die Arme sind durch eine Rasteinrichtung in verschiedenen Schwenkstellungen zueinander haltbar.

Die FR 2 219 429 A1 offenbart eine Brille mit Nasenauflagen, die miteinander gekoppelt sind.

Der Erfindung liegt daher die Aufgabe zugrunde, eine Brille bereitzustellen, die einerseits einen äußerst hohen Tragekomfort bietet und andererseits sicher sitzt. Insbesondere soll verhindert werden, dass sich die eingestellte Lage bzw. Orientierung der Nasenauflegeteile beim Tragen der Brille ungewollt verstellt.

Diese Aufgabe wird erfindungsgemäß durch die in dem unabhängigen Anspruch 1 angegebenen Merkmale gelöst. Der Kern der Erfindung liegt darin, dass die Kopplungsteile bzw. die mit diesen in Verbindung stehenden Nasenauflegeteile durch die Rasteinrichtung stufenartig verstellbar und örtlich festlegbar sind. Die Rasteinrichtung gibt so vorbestimmte Schwenkstellungen für die Kopplungsteile bzw. die Nasenauflegeteile vor. Zum Verstellen der verschiedenen Schwenkstellungen bzw. Raststellungen ist auf das erste Nasenauflegeteil bzw. erste Kopplungsteil und/oder zweite Nasenauflegeteil bzw. zweite Kopplungsteil eine manuelle äußere Verstellkraft aufzubringen, die die rastende örtliche Festlegung bzw. Rastkraft überwindet.

Die Nasenauflegeteile sind insbesondere verstellbar. Es ist von Vorteil, wenn eine Verstellkraft von 20 N bis 80 N, vorzugsweise von 40 N bis 60 N, zur Verschwenkung eines Nasenauflegeteils bzw. eines Kopplungsteils in die verschiedenen Schwenkstellungen erforderlich ist.

Die Rasteinrichtung weist an dem ersten und/oder zweiten Kopplungsteil vorgesehene Rastmittel auf. Es ist von Vorteil, wenn mehrere Rastmittel benachbart nebeneinander, vorzugsweise an beiden Kopplungsteilen, vorhanden sind. Die Rastmittel sind vorzugsweise als Rastzahn oder Rastvertiefung ausgeführt. Es ist von Vorteil, wenn die Rastmittel eine Höhe bzw. Tiefe zwischen 0,05 mm und 0,5 mm, insbesondere zwischen 0,07 mm und 0,2 mm, aufweisen.

Die Rasteinrichtung weist mindestens ein mit den Rastmitteln in Rastverbindung stehendes bzw. kämmendes Rastgegenmittel auf, das an einem Gegenkörper vorgesehen ist. Es ist von Vorteil, wenn das mindestens eine Rastgegenmittel komplementär zu den Rastmitteln ausgeführt ist. Das mindestens eine Rastgegenmittel ist vorzugsweise als Rastvertiefung oder Rastzahn ausgeführt. Günstigerweise sind mehrere Rastgegenmittel nebeneinander angeordnet. Vorteilhafterweise sind für jedes Kopplungsteil mehrere Rastgegenmittel vorgesehen. Der Gegenkörper ist vorzugsweise gegenüber der mindestens einen Brillenscheibe ortsfest. Günstigerweise hat das mindestens eine Rastgegenmittel eine Höhe bzw. Tiefe zwischen 0,05 mm und 0,5 mm, insbesondere zwischen 0,07 mm und 0,2 mm.

Durch die Kopplung zwischen den beiden Kopplungsteilen ist insbesondere erreichbar, dass das Verschwenken des einen Nasenauflegeteils bzw. Kopplungsteils nach innen ein gleichartiges Verschwenken des anderen Nasenauflegeteils bzw. Kopplungsteils nach innen hervorruft. Andererseits bewirkt die Kopplung dann zwischen den Kopplungsteilen, dass ein Verschwenken des einen Nasenauflegeteils bzw. Kopplungsteils nach außen ein gleichartiges Verschwenken des anderen Nasenauflegeteils bzw. Kopplungsteils nach außen bewirkt.

Wenn die Nasenauflegeteile nach innen geschwenkt werden, verkleinert sich die Nasenaufnahmeweite, während ein Schwenken der Nasenauflegeteile nach außen zu einer Vergrößerung der Nasenaufnahmeweite führt. Eine kleine Nasenaufnahmeweite wird eingestellt, wenn die Nase des Brillenträgers eher klein bzw. schmal ist. Umgekehrt wird eine große Nasenaufnahmeweite eingestellt, wenn die Nase des Brillenträgers eher groß bzw. breit ist.

Die Lagerkörper führen zu einer äußerst funktionssicheren Lagerung der Kopplungsteile bzw. der Nasenauflegeteile. Die Lagerkörper stehen vorzugsweise mit dem mindestens einen Brillenteil in Steck- oder Rastverbindung und legen so die Nasenauflegeteil-Anordnung an diesem örtlich fest.

Die Lagerkörper haben jeweils eine Aufnahmeöffnung, die vorzugsweise zentral angeordnet ist. Die Lagerkörper sind günstigerweise jeweils im Wesentlichen buchsenartig bzw. hülsenartig ausgeführt. Es ist zweckmäßig, wenn sich jede Aufnahmeöffnung axial durch den gesamten Lagerkörper erstreckt.

Durch den Eingriff der Eingreifkörper in die Lagerkörper erhalten die Lagerkörper eine äußerst hohe Formstabilität, was zu einer dauerhaft funktionssicheren Lagerung führt.

Die Brille hat beispielsweise eine durchgängige Brillenscheibe oder zwei voneinander getrennte Brillenscheiben. Die Scheibe/n kann/können klar oder getönt sein.

Günstigerweise weist die Brille zwei Bügel oder ein Halteband zum Halten der Brille an dem Brillenträger auf.

Es ist von Vorteil, wenn die Nasenauflegeteile zumindest in ihrem Nasenanlagebereich gepolstert bzw. weich sind. Günstigerweise hat jedes Nasenauflegeteil einen Tragkörper und ein Kissenmaterial, das weicher als der Tragkörper ausgeführt ist und mit diesem in drehfester Verbindung steht. Der Nasenanlagebereich ist vorzugsweise an dem Kissenmaterial gebildet. Der Tragkörper und/oder das Kissenmaterial können verschiedenste Formen haben.

Das erste Nasenauflegeteil und das erste Kopplungsteil sind günstigerweise separat zueinander ausgeführt. Alternativ sind diese einstückig miteinander verbunden.

Das zweite Nasenauflegeteil und das zweite Kopplungsteil sind vorzugsweise separat zueinander ausgeführt. Alternativ sind diese einstückig miteinander verbunden.

Das mindestens eine Brillenteil ist beispielsweise ein Brillenrahmen bzw. ein Brillenrahmenteil. Der Brillenrahmen bzw. das Brillenrahmenteil kann die mindestens eine Brillenscheibe vollständig oder nur bereichsweise umgeben. Der Brillenrahmen bzw. das Brillenrahmenteil ist vorzugsweise separat zu der mindestens einen Brillenscheibe ausgeführt. Alternativ ist dieser/dieses einstückig mit der mindestens einen Brillenscheibe verbunden. Das mindestens eine Brillenteil ist alternativ günstigerweise durch ein/e zwei Brillenscheiben zusammenhaltende/s Brillenbrücke bzw. Bügelelement gebildet. Alternativ ist das mindestens eine Brillenteil vorzugsweise durch ein separates Bügelelement gebildet, das an einer gemeinsamen Brillenscheibe in deren Nasenbereich örtlich festgelegt ist. Die Nasenauflegeteil-Kopplungseinrichtung ist so über das Bügelelement an der gemeinsamen Brillenscheibe befestigt. Das mindestens eine Brillenteil kann auch integraler oder separater Bestandteil der mindestens einen Brillenscheibe sein.

Weitere vorteilhafte Ausgestaltungen der Erfindung sind in den Unteransprüchen angegeben.

Die Ausgestaltung gemäß dem Unteranspruch 2 führt zu einer Brille, deren Nasenauflegeteile an die meisten Nasen von Brillenträgern gut anpassbar sind. Durch den mindestens einen Anschlag ist eine Beschädigung der Nasenauflegeteil-Anordnung durch zu weites Verschwenken der Kopplungsteile nach außen und/oder innen einfach und sicher verhinderbar.

Es ist von Vorteil, wenn der mindestens eine Anschlag Bestandteil der Nasenauflegeteil-Anordnung oder eines Brillenteils der Brille, wie eines Brillenrahmens, eines Brillenrahmenteils oder einer Brillenbrücke, ist. Besonders bevorzugt ist der mindestens eine Anschlag an einem Gegenkörper der Nasenauflegeteil-Anordnung angeordnet. Der mindestens eine Anschlag ist vorzugsweise als Vorsprung ausgeführt.

Die Ausgestaltung gemäß dem Unteranspruch 3 führt zu Kopplungsteilen bzw. Nasenauflegeteilen, die besonders einfach und gut an den Brillenträ ger anpassbar sind. Ferner ist die Kopplung so auch äußerst funktionssicher. Die Schwenkachsen verlaufen vorzugsweise beabstandet nebeneinander.

Die Ausgestaltung gemäß dem Unteranspruch 4 erlaubt eine zusätzliche Anpassung der Nasenauflegeteile an die Nase eines Brillenträgers, was den Komfort bzw. den Sitz der Brille weiter verbessert. Die Nasenauflegeteile sind dann insbesondere jeweils zweifach verstellbar, nämlich insbesondere zum einen um die Nasenaufnahmeweite anzupassen und zum anderen um den Neigungswinkel des jeweiligen Nasenauflegeteils an die Steilheit der betreffenden Flanke des Nasenrückens anzupassen.

Es ist von Vorteil, wenn jedes Nasenauflegeteil gegenüber dem zugehörigen Kopplungsteil in Schritten bzw. Stufen zwischen 5° und 40°, bevorzugter zwischen 10° und 30°, um seine Längsachse verschwenkbar ist.

Die in dem Unteranspruch 5 angegebenen Raststufen führen zu einer Brille, deren Nasenauflegeteile einerseits fein verstellbar sind. Die Festlegung der Kopplungsteile bzw. Nasenauflegeteile durch Rastung ist andererseits sicher gegeben.

Vorzugsweise ist eine Verstellung der Kopplungsteile bzw. der Nasenauflegeteile in Schritten zwischen 1° und 10°, bevorzugter zwischen 2° und 8°, bezogen auf die jeweilige Schwenkachse möglich.

Die in dem Unteranspruch 6 angegebene Kopplung zwischen den Kopplungsteilen erlaubt eine sichere und einfache Übertragung der Bewegung des einen Kopplungsteils auf das andere Kopplungsteil. Es ist von Vorteil, wenn die Zahnverbindung durch mindestens einen Zahn geschaffen ist, der Bestandteil des einen Kopplungsteils ist und in mindestens eine entsprechende Vertiefung in dem anderen Kopplungsteil eingreift. Alternativ ist beispielsweise eine Kopplung über Reibschluss zwischen den Kopplungsteilen vorhanden.

Die Ausgestaltung gemäß dem Unteranspruch 7 erlaubt eine äußerst einfache und kostengünstige Montage der Nasenauflegeteil-Anordnung an dem mindestens einen Brillenteil.

Gemäß dem Unteranspruch 8 hält der Gegenkörper die Kopplungsteile zusammen. Die Kopplung zwischen den beiden Kopplungsteilen ist so stets sichergestellt, was zu einer äußerst funktionssicheren Nasenauflegeteil-Anordnung führt.

Gemäß dem Unteranspruch 9 führt der Gegenkörper zu einer weiteren Sicherung der Nasenauflegeteile an dem mindestens einen Brillenteil.

Nachfolgend wird unter Bezugnahme auf die beigefügte Zeichnung eine bevorzugte Ausführungsform der Erfindung beschrieben. Dabei zeigen:
- Fig. 1: eine Ansicht einer erfindungsgemäßen Brille von hinten,

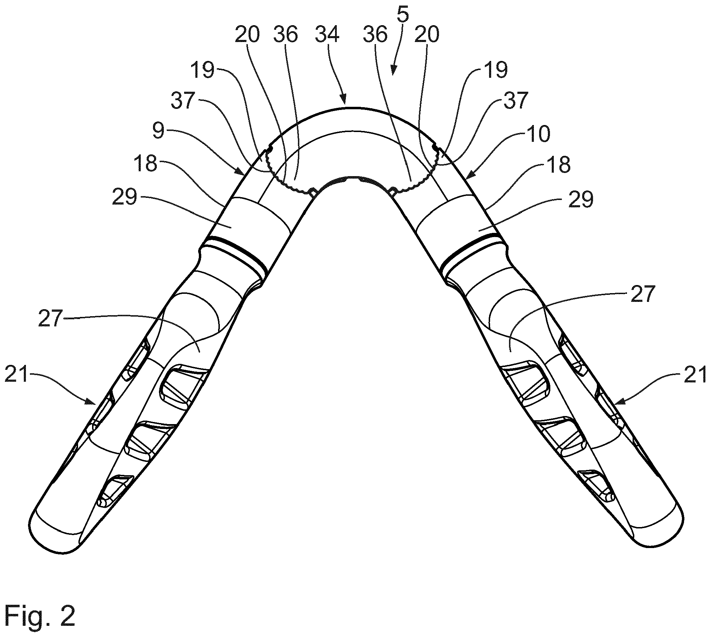

- Fig. 2: eine isolierte Darstellung der Nasenauflegeteil-Anordnung der in Fig. 1 dargestellten Brille von hinten,

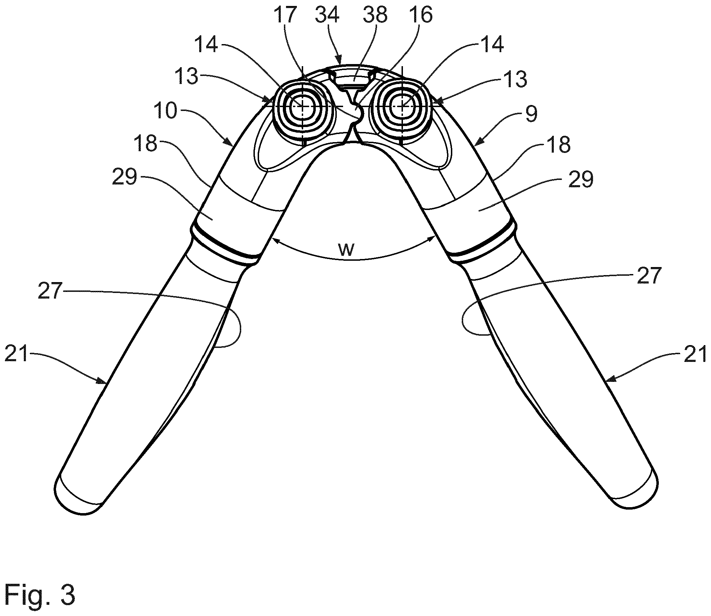

- Fig. 3: eine Ansicht der in Fig. 2 dargestellten Nasenauflegeteil-Anordnung von vorne,

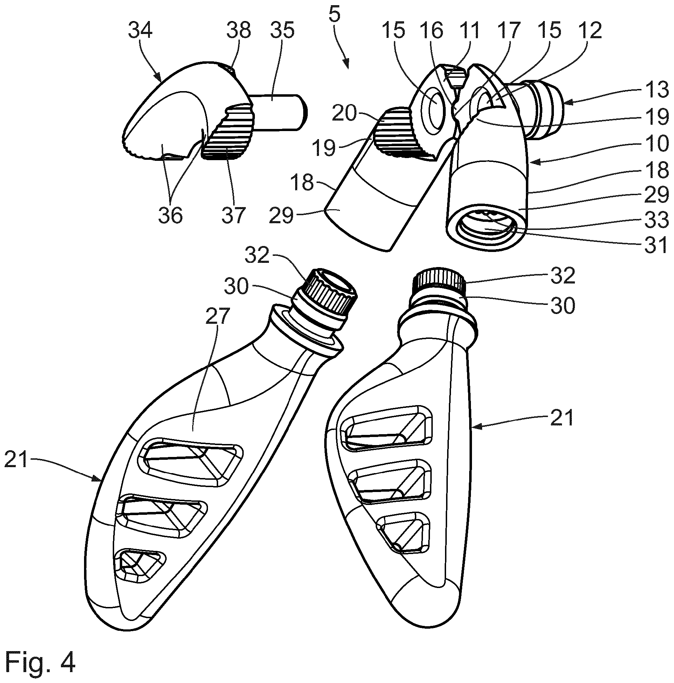

- Fig. 4: eine Explosionsansicht der in den Fig. 2 und 3 gezeigten Nasenauflegeteil-Anordnung, und

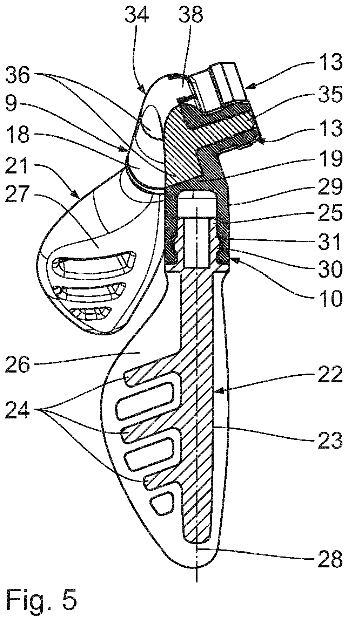

- Fig. 5: im Wesentlichen einen Längsschnitt durch ein Nasenauflegeteil und das mit diesem in Verbindung stehenden Kopplungsteil der in den Fig. 2 bis 4 dargestellten Nasenauflegeteil-Anordnung.

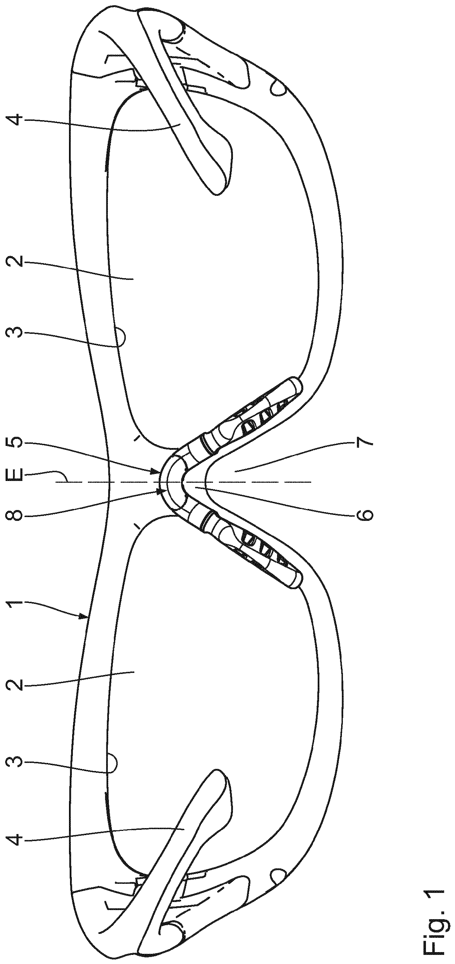

Eine in Fig. 1 in ihrer Gesamtheit gezeigte Brille umfasst einen Brillenrahmen 1 und zwei Brillenscheiben 2, die in entsprechende Scheibenöffnungen 3 des Brillenrahmens 1 eingesetzt sind. Ferner hat die Brille zwei Bügel 4, die seitlich an dem Brillenrahmen 1 angelenkt sind. Die Brille weist auch eine Nasenauflegeteil-Anordnung 5 auf, die zwischen den Brillenscheiben 2 an einem zentralen Brillen-Nasenbereich 6 des Brillenrahmens 1 befestigt ist. Der Brillen-Nasenbereich 6 befindet sich oberhalb einer Brillen-Nasenausnehmung 7 des Brillenrahmens 1.

Der Brillenrahmen 1 kann einstückig mit den Brillenscheiben 2 verbunden sein. Die Nasenauflegeteil-Anordnung 5 kann auch direkt an den Brillenscheiben 2 befestigt sein. Sie kann auch an einer gemeinsamen Brillenscheibe in deren Nasenbereich angeordnet sein. Günstigerweise ist die Nasenauflegeteil-Anordnung 5 dann an einem Bügelelement angeordnet, das wiederum an der gemeinsamen Brillenscheibe in deren Nasenbereich befestigt ist. Beispielsweise ist das Bügelelement an der gemeinsamen Brillenscheibe durch eine Klick-Verbindung, Rast-Verbindung, SteckVerbindung, Klebe-Verbindung oder dergleichen örtlich festgelegt. Die Bügel 4 können auch direkt an der Brillenscheibe bzw. den Brillenscheiben angelenkt sein.

Beispielsweise ist der Brillen-Nasenbereich 6 durch ein separates Bügelelement (nicht dargestellt) gebildet, das zwischen den beiden Brillenscheiben 2 angeordnet ist und an diesen befestigt ist. Beispielsweise sind zur Befestigung des Bügelelements in den Brillenscheiben 2 Hinterschnitte vorgesehen. Die Nasenauflegeteil-Anordnung 5 ist dann günstigerweise an dem Bügelelement befestigt. Es kann eine Rastverbindung zwischen dem Bügelelement und der Nasenauflegeteil-Anordnung 5 vorhanden sein.

Wenn die Brille bestimmungsgemäß getragen wird, ragt die Nase eines Brillenträgers (nicht dargestellt) in die Brillen-Nasenausnehmung 7, während die Nasenauflegeteil-Anordnung 5 die Brille gegenüber der Nase des Brillenträgers abstützt und vorzugsweise dem Gesicht des Brillenträgers zugewandt ist.

Die Brille ist im Wesentlichen bezüglich einer Mittelebene E symmetrisch ausgeführt, die mittig zwischen den Brillenscheiben 2 durch die Nasenauflegeteil-Anordnung 5 geht.

Die Nasenauflegeteil-Anordnung 5 hat eine Nasenauflegeteil-Kopplungseinrichtung 8, die innenseitig über der Brillen-Nasenausnehmung 7 an dem Brillen-Nasenbereich 6 befestigt ist. Die Kopplungseinrichtung 8 wiederum umfasst ein erstes Kopplungsteil 9 und ein zweites Kopplungsteil 10, das mit dem ersten Kopplungsteil 9 mechanisch gekoppelt ist.

Jedes Kopplungsteil 9, 10 hat einen Kopplungskörper 11 bzw. 12, der jeweils im Wesentlichen plattenförmig ausgeführt ist. Von jedem Kopplungskörper 11 bzw. 12 springt ein Lagerkörper 13 senkrecht vor, der im Wesentlichen buchsenartig ausgeführt ist und eine eigene Schwenkachse 14 vorgibt. Die Lagerkörper 13 begrenzen jeweils eine zentrale Aufnahmeöffnung 15 nach radial außen und sind identisch ausgeführt. Die Aufnahmeöffnungen 15 durchsetzen die Lagerkörper 13 vollständig in Richtung der jeweiligen Schwenkachse 14.

Im montierten Zustand greifen die Lagerkörper 13 in entsprechende Lageraufnahmen (nicht dargestellt) in dem Brillenrahmen 1. Der erste und zweite Kopplungskörper 11 bzw. 12 sind um ihre Schwenkachsen 14 in den Lageraufnahmen verschwenkbar. Die Schwenkachsen 14 verlaufen parallel zueinander und nebeneinander. Sie erstrecken sich im Wesentlichen in einer Blickrichtung des Brillenträgers. Die Lagerkörper 13 stehen mit den Lageraufnahmen in Schnapp-, Steck- und/oder Rastverbindung, die lösbar sein kann.

Bezogen auf die jeweilige Schwenkachse 14 springt von dem zweiten Kopplungskörper 12 ein Kopplungsvorsprung 16 radial nach außen vor, während in dem ersten Kopplungskörper 11 eine zu dem Kopplungsvorsprung 16 komplementäre, nach radial außen offene Kopplungsvertiefung bzw. -aussparung 17 seitlich bzw. umfangsseitig vorhanden ist, in die der Kopplungsvorsprung 16 im Wesentlichen formschlüssig eingreift. Bei einer Verschwenkung der Kopplungsteile 9, 10 stehen der Kopplungsvorsprung 16 und die Kopplungsvertiefung 17 stets miteinander in Eingriff. Alternativ sind der Kopplungsvorsprung 16 und die Kopplungsvertiefung 17 vertauscht an den Kopplungskörpern 11, 12 angeordnet.

An jeden Kopplungskörper 11, 12 schließt sich ein Kopplungsstück 18 an. Die Kopplungsstücke 18 sind identisch ausgeführt. Jedes Kopplungsstück 18 ist im Wesentlichen topfartig ausgeführt. Es hat einen Boden 19 und eine sich an den Boden 19 anschließende Seitenwandung 29, die im Querschnitt im Wesentlichen kreisringförmig ausgeführt ist. Die Böden 19 sind benachbart zu dem jeweiligen Kopplungskörper 11 bzw. 12 angeordnet und sind bezüglich der jeweiligen benachbarten Schwenkachse 14 konvex gekrümmt. Sie sind bezogen auf das jeweilige Kopplungsstück 18 konkav gekrümmt und erstrecken sich um die jeweilige Schwenkachse 14.

An jedem Boden 19 ist eine Vielzahl von Rastmitteln 20 vorgesehen, die sich parallel zueinander in Richtung der jeweiligen Schwenkachse 14 und um diese erstrecken. Die Rastmittel 20 haben vorzugsweise eine im Wesentlichen identische radiale Erstreckung bezüglich der jeweiligen Schwenkachse 14.

Ferner hat die Nasenauflegeteil-Anordnung 5 zwei Nasenauflegeteile 21, die vorzugsweise identisch zueinander ausgeführt sind. Jedes Nasenauflegeteil 21 umfasst einen Tragkörper 22, der vorzugsweise einen zylindrischen Kern 23 und sich seitlich an diesen anschließende Haltearme 24 umfasst.

Jedes Nasenauflegeteil 21 weist außerdem einen Anschlusskörper 25 auf, der sich vorzugsweise axial an den Kern 23 anschließt und mit diesem drehfest verbunden ist. Der Kern 23 und die Haltearme 24 sind vorzugsweise jeweils von einem Kissenmaterial 26 umgeben, das vorzugsweise weicher als das Material des Tragkörpers 22 ist. Es ist drehfest mit dem Tragkörper 22 verbunden. Alternativ haben die Tragkörper 22 eine andere Gestalt bzw. Form.

Jedes Nasenauflegeteil 21 hat ferner eine Längsachse 28, die sich vorzugsweise durch den Anschlusskörper 25 und den zylindrischen Kern 23 erstreckt.

Die Nasenauflegeteile 21 weisen jeweils einen inneren Nasenanlagebereich 27 zur seitlichen Anlage an der Nase des Brillenträgers auf. Die Nasenanlagebereiche 27 der Nasenauflegeteile 21 sind einander zugewandt und verlaufen vorzugsweise schräg zueinander. Wenn die Brille getragen wird, liegen die Nasenanlagebereiche 27 im Wesentlichen an einander gegenüberliegenden Seiten an der Nase des Brillenträgers an. Die Nasenanlagebereiche 27 begrenzen eine Nasenaufnahmeweite w nach seitlich außen, die manuell veränderbar bzw. einstellbar ist.

Jedes Nasenauflegeteil 21 ist über seinen Anschlusskörper 25 mit dem jeweiligen Kopplungsstück 18 schwenkbar verbunden. Jeder Anschlusskörper 25 greift in das zugehörige Kopplungsstück 18 ein. Zwischen dem Anschlusskörper 25 und dem zugehörigen Kopplungsstück 18 liegt einerseits jeweils eine in Richtung der Längsachse 28 wirksame Schnappverbindung vor. Dazu ist an jedem Anschlusskörper 25 ein Schnappsteg 30 vorhanden, der sich außen um die Längsachse 28 an dem Anschlusskörper 25 erstreckt und in eine entsprechende Schnappvertiefung 31 in der Seitenwandung 29 eingreift. Andererseits liegt zwischen jedem Kopplungsstück 18 und dem zugeordneten Nasenauflegeteil 21 eine Rastverbindung vor, die eine gestufte Verschwenkung des Nasenauflegeteils 21 um dessen Längsachse 28 gegenüber dem jeweiligen Kopplungsstück 18 bewirkt. Dafür sind an jedem Anschlusskörper 25 äußere Rastelemente 32 um die jeweilige Längsachse 28 angeordnet, die mit komplementären Rastgegenelementen 33 in der Seitenwandung 29 in Rastverbindung stehen.

Ferner umfasst die Nasenauflegeteil-Anordnung 5 einen brückenartigen bzw. bogenförmigen Gegenkörper 34. Der Gegenkörper 34 hat zwei Eingreifkörper 35, die identisch zueinander ausgebildet sind und zylindrisch sind. Die beiden Eingreifkörper 35 verlaufen parallel nebeneinander. Sie sind komplementär zu den Aufnahmeöffnungen 15 ausgeführt.

Im montierten Zustand der Nasenauflegeteil-Anordnung 5 greifen die Eingreifkörper 35 formschlüssig in die Aufnahmeöffnungen 15 ein und stabilisieren so die Lagerkörper 13. Der Gegenkörper 34 hält die Kopplungsteile 9, 10 in Eingriff und sicher an dem Brillenrahmen 1.

Der brückenförmige Gegenkörper 34 hat ferner ein erstes Ende 36 und ein dem ersten Ende 36 abgewandtes zweites Ende 36. Die Enden 36 sind bauchig nach außen gekrümmt und so jeweils an die Böden 19 angepasst. Die Enden 36 schmiegen sich an die Böden 19 an. An jedem Ende 36 sind mehrere Rastgegenmittel 37 vorgesehen, die sich parallel nebeneinander in der Richtung der jeweiligen Schwenkachse 14 erstrecken. Die Rastgegenmittel 37 sind komplementär zu den Rastmitteln 20 ausgebildet und stehen mit den Rastmitteln 20 in lösbarer Rastverbindung.

Der Gegenkörper 34 ist im montierten Zustand unbeweglich zu dem Brillenrahmen 1 bzw. zu den Brillenscheiben 2. Er überbrückt die Kopplungskörper 11, 12 und ist gegenüberliegend zu den Lagerkörpern 13 an den Kopplungskörpern 11, 12 angeordnet.

An dem Gegenkörper 34 ist mittig oberhalb der Eingreifkörper 35 ein Anschlag 38 angeordnet, der vorzugsweise in die Richtung der Eingreifkörper 35 vorspringt und in einem oberen Bereich zwischen die Kopplungskörper 11, 12 eingreift. Der Anschlag 38 bestimmt bzw. begrenzt die maximale Nasenaufnahmeweite w. Mindestens einer der Kopplungskörper 11, 12 liegt an dem blockierend wirkenden Anschlag 38 an, wenn sich die Nasenauflegeteile 21 in ihrer äußersten Schwenkstellung befinden bzw. die maximale Nasenaufnahmeweite w erreicht ist. Vorzugsweise liegen dann beide Kopplungskörper 11, 12 an dem Anschlag 38 an. Der Anschlag 38 verhindert ein weiteres Verschwenken der Nasenauflegeteile 21 nach seitlich außen.

Aufgrund der Verbindung der Nasenauflegeteile 21 mit den zugeordneten Kopplungsteilen 9 bzw. 11 führt ein Verschwenken der Nasenauflegeteile 21 zu einem gleichartigen Verschwenken der Kopplungsteile 9 bzw. 10 und umgekehrt.

Durch den rastenden Eingriff der Rastmittel 20 des ersten Kopplungsteils 9 in die Rastgegenmittel 37 des ersten Endes 36 und den rastenden Eingriff der Rastmittel 20 des zweiten Kopplungsteils 10 in die Rastgegenmittel 39 des zweiten Endes 36 sind die Nasenauflegeteile 21 in ihren verschiedenen Schwenkstellungen rastend örtlich festgelegt.

## Patentansprüche

1. Brille, umfassend
a. mindestens eine Brillenscheibe (2),
b. eine Nasenausnehmung (7),
c. mindestens ein Brillenteil (1), und
d. eine im Bereich der Nasenausnehmung (7) vorgesehene Nasenauflegeteil-Anordnung (5)
i. mit einem ersten Nasenauflegeteil (21) zur seitlichen Anlage an der Nase eines Brillenträgers,
ii. mit einem dem ersten Nasenauflegeteil (21) gegenüberliegenden zweiten Nasenauflegeteil (21) zur seitlichen Anlage an der Nase des Brillenträgers, und
iii. mit einer Nasenauflegeteil-Kopplungseinrichtung (8),
- die mit dem mindestens einen Brillenteil (1) in Verbindung steht,
- die ein erstes Kopplungsteil (9) umfasst, das
-- das erste Nasenauflegeteil (21) hält,
-- um eine erste Schwenkachse (14) verschwenkbar ist, und
-- durch einen ersten Lagerkörper (13) an dem mindestens einen Brillenteil (1) unter Bildung der ersten Schwenkachse (14) schwenkbar gelagert ist, und
- die ein zweites Kopplungsteil (10) umfasst, das
-- das zweite Nasenauflegeteil (21) hält,
-- um eine zweite Schwenkachse (14) verschwenkbar ist, und
-- durch einen zweiten Lagerkörper (13) an dem mindestens einen Brillenteil (1) unter Bildung der zweiten Schwenkachse (14) schwenkbar gelagert ist,
- wobei das erste Kopplungsteil (9) und das zweite Kopplungsteil (10) zur Änderung einer Nasenaufnahmeweite w zwischen dem ersten Nasenauflegeteil (21) und dem zweiten Nasenauflegeteil (21) um die erste bzw. zweite Schwenkachse (14) in verschiedene Schwenkstellungen verschwenkbar sind,
- wobei das erste Kopplungsteil (9) und das zweite Kopplungsteil (10) derart miteinander gekoppelt sind, dass eine Verschwenkung des einen Nasenauflegeteils (21) zur Änderung der Nasenaufnahmeweite w um die eine Schwenkachse (14) eine die Nasenaufnahmeweite w beeinflussende Verschwenkung des anderen Nasenauflegeteils (21) um die andere Schwenkachse (14) hervorruft,
- wobei die Rasteinrichtung an dem ersten und/oder zweiten Kopplungsteil (9, 10) vorgesehene Rastmittel (20) aufweist, wobei eine Vielzahl der Rastmittel (20) vorgesehen ist,
- wobei die Rasteinrichtung mindestens ein mit den Rastmitteln (20) in Rastverbindung stehendes Rastgegenmittel (37) aufweist, das an einem Gegenkörper (34) vorgesehen ist, **dadurch gekennzeichnet, dass**
e. der erste Lagerkörper (13) und der zweite Lagerkörper (13) jeweils eine Aufnahmeöffnung (15) haben,
f. der Gegenkörper (34) zwei Eingreifkörper (35) aufweist, die in die beiden Aufnahmeöffnungen (15) eingreifen,
g. die Nasenauflageteil-Anordnung (5) eine Rasteinrichtung zur rastenden örtlichen Festlegung der Kopplungsteile (9, 10) in den verschiedenen Schwenkstellungen aufweist, und
h. sich die Rastmittel (20) parallel zueinander in Richtung der jeweiligen Schwenkachse (14) und um diese erstrecken und dieser zugewandt ist.

2. Brille nach Anspruch 1, **dadurch gekennzeichnet, dass** jedes Nasenauflegeteil (21) zur Änderung der Nasenaufnahmeweite w um 3° bis 30°, bevorzugter um 5° bis 15°, um die Schwenkachse (14) des zugeordneten Kopplungsteils (9, 10) verschwenkbar ist, wobei vorzugsweise die Verschwenkung der Kopplungsteile (9, 10) um die Schwenkachsen (14) mindestens einseitig durch mindestens einen Anschlag (38) begrenzt ist.

3. Brille nach Anspruch 1 oder 2, **dadurch gekennzeichnet, dass** die erste Schwenkachse (14) und die zweite Schwenkachse (14) parallel zueinander verlaufen.

4. Brille nach einem der vorherigen Ansprüche, **dadurch gekennzeichnet, dass** die beiden Nasenauflegeteile (21) gegenüber den Kopplungsteilen (9, 10) außerdem um ihre Längsachsen (28) verschwenkbar sind.

5. Brille nach einem der vorherigen Ansprüche, **dadurch gekennzeichnet, dass** die Rasteinrichtung zwischen drei und zwanzig, bevorzugter zwischen fünf und fünfzehn, Raststufen vorgibt.

6. Brille nach einem der vorherigen Ansprüche, **dadurch gekennzeichnet, dass** das erste Kopplungsteil (9) und das zweite Kopplungsteil (10) zur Übertragung der Schwenkbewegung zwischen den Kopplungsteilen (9, 10) durch Formschluss, insbesondere durch eine Zahnverbindung (16, 17), miteinander gekoppelt sind.

7. Brille nach einem der vorherigen Ansprüche, **dadurch gekennzeichnet, dass** die Nasenauflegeteil-Kopplungseinrichtung (8) mit dem mindestens einen Brillenteil (1) durch eine Steckverbindung oder Rastverbindung in Verbindung steht.

8. Brille nach einem der vorherigen Ansprüche, **dadurch gekennzeichnet, dass** der Gegenkörper (34) die Kopplungsteile (9, 10) außerdem miteinander gekoppelt hält.

9. Brille nach einem der vorherigen Ansprüche, **dadurch gekennzeichnet, dass** der Gegenkörper (34) die beiden Nasenauflegeteile (21) außerdem an dem mindestens einen Brillenteil (1) hält.

10. Brille nach einem der vorherigen Ansprüche, **dadurch gekennzeichnet, dass** die zwei Eingreifkörper (35) in die beiden Aufnahmeöffnungen (15) formschlüssig eingreifen.

11. Brille nach einem der vorherigen Ansprüche, **dadurch gekennzeichnet, dass** eine Verstellung der Nasenauflegeteile (21) in Schritten zwischen 1° und 10°, bevorzugter zwischen 2° und 8°, bezogen auf die jeweilige Schwenkachse (14) möglich ist.

## Claims

1. Spectacles comprising
a. at least one lens (2),
b. a nose recess (7),
c. at least one spectacle part (1), and
d. a nose pad assembly (5) provided in the region of the nose recess (7), the nose pad assembly (5) comprising
i. a first nose pad (21) for lateral contact with a spectacle wearer's nose,
ii. a second nose pad (21) arranged opposite the first nose pad (21) for lateral contact with the spectacle wearer's nose, and
iii. a nose pad coupling device (8),
- which is connected to the at least one spectacle part (1),
- which comprises a first coupling part (9), which
-- holds the first nose pad (21),
-- is pivotable about a first pivot axis (14), and
-- is pivotably mounted, by means of a first bearing body (13), on the at least one spectacle part (1), thus forming the first pivot axis (14), and
- which comprises a second coupling part (10), which
-- holds the second nose pad (21),
-- is pivotable about a second pivot axis (14), and
-- is pivotably mounted, by means of a second bearing body (13), on the at least one spectacle part (1), thus forming the second pivot axis (14),
- wherein the first coupling part (9) and the second coupling part (10) are pivotable about the first or second pivot axis (14), respectively, into various pivot positions to change a nose recess width w between the first nose pad (21) and the second nose pad (22),
- wherein the first coupling part (9) and the second coupling part (10) are coupled with each other in such a way that a pivoting movement of one nose pad (21) about the respective pivot axis (14) to change the nose recess width w causes a pivoting movement of the other nose pad (21) about the other pivot axis (14) to influence the nose recess width w,
- wherein the latching device has latching means (20) provided on the first and/or second coupling part (9, 10), wherein a plurality of the latching means (20) is provided,
- wherein the latching device has at least one counterpart latching means (37) provided on a counterpart body (34), said counterpart latching means (37) being in a latching connection with the latching means (20),
**characterized in that**
e. the first bearing body (13) and the second bearing body (14) each have a receiving opening (15),
f. the counterpart body (34) has two engagement bodies (35), which engage the two receiving openings (15),
g. the nose pad assembly (5) has a latching device to locally secure the coupling parts (9, 10) in the various pivot positions in a latching manner, and
h. the latching means (20) extend parallel to each other in a direction of and about the respective pivot axis (14) in such a way as to face the respective pivot axis (14).

2. Spectacles as claimed in claim 1, **characterized in that** in order to change the nose recess width w, each nose pad (21) is pivotable about the pivot axis (14) of the associated coupling part (9, 10) through 3° to 30°, more preferably through 5° through 15°, wherein preferably the pivoting movement of the coupling parts (9, 10) about the pivot axis (14) is limited by at least one stop (38) at least on one side.

3. Spectacles as claimed in claim 1 or 2, **characterized in that** the first pivot axis (14) and the second pivot axis (14) run parallel to one another.

4. Spectacles as claimed in any one of the preceding claims, **characterized in that** the two nose pads (21) are furthermore pivotable about their longitudinal axes (28) in relation to the coupling parts (9, 10).

5. Spectacles as claimed in any one of the preceding claims, **characterized in that** the latching device defines between three and twenty, more preferably between five and fifteen, latching stages.

6. Spectacles as claimed in any one of the preceding claims, **characterized in that** the first coupling part (9) and the second coupling part (10) are coupled to one another by a positive connection, in particular by a toothed connection (16, 17), to transfer the pivoting movement between the coupling parts (9, 10).

7. Spectacles as claimed in any one of the preceding claims, **characterized in that** the nose pad coupling device (8) is connected to the at least one spectacle part (1) by means of a plug-in connection or a latching connection.

8. Spectacles as claimed in any one of the preceding claims, **characterized in that** the counterpart body (34) furthermore holds the coupling parts (9, 10) in a coupled connection.

9. Spectacles as claimed in any one of the preceding claims, **characterized in that** the counterpart body (34) furthermore holds the two nose pads (21) on the at least one spectacle part (1).

10. Spectacles as claimed in any one of the preceding claims, **characterized in that** the two engagement bodies (35) engage the two receiving openings in a positively locking manner.

11. Spectacles as claimed in any one of the preceding claims, **characterized in that** an adjustment of the nose pads (21) in stages of between 1° and 10°, more preferably between 2° and 8°, in relation to the respective pivot axis (14) is possible.

## Revendications

1. Lunettes comprenant
a. au moins un verre de lunettes (2),
b. un évidement pour le nez (7),
c. au moins une partie de lunettes (1), et
d. un ensemble pour poser le nez (5) disposé dans la zone de l'évidement pour le nez (7)
i. avec une première partie pour poser le nez (21) pour la mise en place latérale sur le nez d'un porteur des lunettes,
ii. avec une deuxième partie pour poser le nez (21) opposée à la première partie pour poser le nez (21) pour la mise en place latérale sur le nez du porteur des lunettes, et
iii. avec un dispositif de couplage de la partie pour poser le nez (8),
- étant en liaison avec l'au moins une partie de lunettes (1),
- comprenant un premier élément de couplage (9) qui
-- supporte la première partie pour poser le nez (21),
-- peut pivoter autour d'un premier axe de pivotement (14), et
-- est monté de manière pivotante par un premier corps porteur (13) sur l'au moins une partie de lunettes (1), formant le premier axe de pivotement (14), et
- comprenant un deuxième élément de couplage (10) qui
-- supporte la deuxième partie pour poser le nez (21),
-- peut pivoter autour d'un deuxième axe de pivotement (14), et
-- est monté de manière pivotante par un deuxième corps porteur (13) sur l'au moins une partie de lunettes (1), formant le deuxième axe de pivotement (14), et,
- le premier élément de couplage (9) et le deuxième élément de couplage (10) pouvant pivoter dans différentes positions de pivotement autour du premier axe de pivotement, respectivement autour du deuxième axe de pivotement (14), afin de changer l'étendue pour loger le nez w entre la première partie pour poser le nez (21) et la deuxième partie pour poser le nez (21),
- le premier élément de couplage (9) et le deuxième élément de couplage (10) étant couplés l'un à l'autre de sorte qu'un pivotement de l'une partie pour poser le nez (21) autour de l'un axe de pivotement (14) afin de changer l'étendue pour loger le nez w provoque un pivotement de l'autre partie pour poser le nez (21) autour de l'autre axe de pivotement (14), affectant l'étendue pour loger le nez w,
- le dispositif d'enclenchement présentant des moyens d'enclenchement (20) disposés sur le premier et/ou sur le deuxième élément de couplage (9, 10), une pluralité des moyens d'enclenchement (20) étant disposée,
- le dispositif d'enclenchement présentant au moins un moyen d'enclenchement équivalent (37) disposé sur un corps équivalent (34), étant en liaison d'enclenchement avec les moyens d'enclenchement (20),
**caractérisé en ce que**
e. le premier corps porteur (13) et le deuxième corps porteur (13) ont une ouverture de logement (15), respectivement,
f. le corps équivalent présente deux corps d'engrenage (35) s'engrenant avec les deux ouvertures de logement (15),
g. l'ensemble pour poser le nez (5) présente un dispositif d'enclenchement pour arrêter les éléments de couplage (9, 10) localement de manière enclenchée dans les différentes positions de pivotement, et
h. les moyens d'enclenchement (20) s'étendent parallèlement l'un par rapport à l'autre en direction de l'axe de pivotement (14) respectif et atour de celui-ci, et sont tournés vers celui-ci.

2. Lunettes selon la revendication 1, **caractérisé en ce que** chaque partie pour poser le nez (21), afin de changer l'étendue pour loger le nez w, peut être pivoter de 3° à 30°, plus préférablement de 5° à 15°, autour de l'axe de pivotement (14) de l'élément de couplage (9, 10) associé, le pivotement des éléments de couplage (9, 10) autour des axes de pivotement (14) étant préférablement limité au moins d'un côté par au moins une butée (38).

3. Lunettes selon la revendication 1 ou 2, **caractérisé en ce que** le premier axe de pivotement (14) et le deuxième axe de pivotement (14) sont parallèles l'un par rapport à l'autre.

4. Lunettes selon l'une quelconque des revendications précédentes, **caractérisé en ce que** les deux parties pour poser le nez (21) en plus peuvent être pivotées par rapport aux éléments de couplage (9, 10) autour de leurs axes longitudinaux (28).

5. Lunettes selon l'une quelconque des revendications précédentes, **caractérisé en ce que** le dispositif d'enclenchement prédéfini entre trois et vingt, plus préférablement entre cinq et quinze niveaux d'enclenchement.

6. Lunettes selon l'une quelconque des revendications précédentes, **caractérisé en ce que** le premier élément de couplage (9) et le deuxième élément de couplage (10) sont couplés l'un à l'autre pour la transmission du mouvement de pivotement entre les éléments de couplage (9, 10) par un engagement positif, en particulier par une liaison dentée (16, 17).

7. Lunettes selon l'une quelconque des revendications précédentes, **caractérisé en ce que** le dispositif de couplage de la partie pour poser le nez (8) est lié à l'au moins une partie de lunettes (1) par une connexion enfichable ou une liaison d'enclenchement.

8. Lunettes selon l'une quelconque des revendications précédentes, **caractérisé en ce que** le corps équivalent (34) en plus tient les éléments de couplage (9, 10) dans un statut couplé l'un à l'autre.

9. Lunettes selon l'une quelconque des revendications précédentes, **caractérisé en ce que** le corps équivalent (34) en plus tient les deux parties pour poser le nez (21) à l'au moins une partie de lunettes (1).

10. Lunettes selon l'une quelconque des revendications précédentes, **caractérisé en ce que** les deux corps d'engrenage (35) engrènent à engagement positif dans les deux ouvertures de logement (15).

11. Lunettes selon l'une quelconque des revendications précédentes, **caractérisé en ce qu'un** réglage des parties pour poser le nez (21) est possible par incréments entre 1° et 10°, plus préférablement entre 2° et 8°, par rapport à l'axe de pivotement (14) respectif.
